(19) Europäisches Patentamt
European Patent Office
Office européen des brevets

(11) Veröffentlichungsnummer: **0 295 675 B1**

# (12) EUROPÄISCHE PATENTSCHRIFT

(45) Veröffentlichungstag der Patentschrift: **06.11.91**

(51) Int. Cl.[5]: **C08F 8/34**, C08C 19/44, C08F 293/00

(21) Anmeldenummer: **88109633.3**

(22) Anmeldetag: **16.06.88**

## (54) Verfahren zur Herstellung von Mercapto-Endgruppen aufweisenden Homo- oder Copolymerisaten und deren Verwendung.

(30) Priorität: **19.06.87 DE 3720322**

(43) Veröffentlichungstag der Anmeldung:
**21.12.88 Patentblatt 88/51**

(45) Bekanntmachung des Hinweises auf die Patenterteilung:
**06.11.91 Patentblatt 91/45**

(84) Benannte Vertragsstaaten:
**BE DE FR GB IT NL**

(56) Entgegenhaltungen:
**US-A- 2 992 210**
**US-A- 4 031 290**
**US-A- 4 169 115**
**US-A- 4 544 711**
**US-A- 4 567 239**

**CHEMICAL ABSTRACTS, Band 76, Nr. 6, 7. Februar 1972, Seite 30, Nr. 25967c, Columbus, Ohio, US; & JP-A-71 27 532 (ASAHI CHEMICAL INDUSTRY CO., LTD) 10-08-1971**

(73) Patentinhaber: **BASF Aktiengesellschaft**
**Carl-Bosch-Strasse 38**
**W-6700 Ludwigshafen(DE)**

(72) Erfinder: **Bronstert, Klaus, Dr.**
**Gartenstrasse 26**
**W-6719 Carlsberg(DE)**
Erfinder: **Walter, Hans-Michael, Dr.**
**Im Haagweg 6**
**W-6701 Ruppertsberg(DE)**
Erfinder: **Schwaben, Hans-Dieter, Dr.**
**Lindenstrasse 3**
**W-6721 Freisbach(DE)**

**EP 0 295 675 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Mercapto-Endgruppen aufweisenden Homo- oder Copolymerisaten, die aufgebaut sind aus mindestens einem Monomeren aus der Gruppe Butadien, Isopren oder Styrol und erhalten werden durch anionische Polymerisation von mindestens einem der genannten Monomeren in Gegenwart mindestens einer Organolithiumverbindung und anschließender Umsetzung (der lebenden Anionen) mit einem Episulfid der allgemeinen Formel I

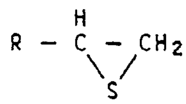

I

in der

R für Wasserstoff, Alkylgruppen mit 1 bis 18 C-Atomen oder Arylreste mit 6 bis 10 C-Atomen steht,

unter Bildung von mindestens einer primären oder sekundären Mercapto-Gruppe am Ende der Polymerkette(n).

Zum Stand der Technik nennen wir:

(1) DE-OS 28 13 328

(2) EP 240 903

(3) EP 240 905

In (1) wird ein Verfahren zur Herstellung von primäre oder sekundäre Mercapto-Endgruppen aufweisenden Polymerisaten und deren Verwendung zur Herstellung von Blockcopolymerisaten aus einem anionisch initiierten und einem radikalisch polymerisierten Block beschrieben.

Des weiteren wird in (2) ein kontinuierliches und in (3) ein diskontinuierliches Verfahren zur Herstellung von schlagfestem, transluzentem Polystyrol auf Basis Mercapto-Endgruppen aufweisender, anionisch polymerisierter Kautschuke beschrieben.

Bei der Herstellung von Mercapto-Endgruppen aufweisenden Polymerisaten durch Polymerisation anionisch polymerisierbarer Monomerer mit z.B. Butyllithium als Initiator und anschließender Umsetzung des reaktiven Kettenendes mit einem Episulfid, z.B. nach dem in (1) beschriebenen Verfahren, wird im allgemeinen eine Nebenreaktion in Form einer Kupplung von Polymerketten (der ursprünglichen Molmasse vor der Umsetzung mit dem Episulfid) zu höheren Polymeren mit der zwei- und mehrfachen Molmasse in erheblichem Ausmaß beobachtet. Bei der weiteren Umsetzung der Mercapto-Endgruppen aufweisenden Polymerisate zu Blockcopolymerisaten oder schlagfestem, transluzentem Polystyrol oder Poly(alkyl)-styrol sind diese gekuppelten Nebenprodukte inaktiv und bewirken eine Verringerung der Blockcopolymerausbeute und eine schlechtere Transluzenz.

Es bestand daher die Aufgabe, das in (1) beschriebene Verfahren zur Herstellung Mercapto-Endgruppen aufweisender Polymerisate so zu verbessern, daß die Kupplungsreaktion unterdrückt wird.

Die Aufgabe wird gelöst durch ein Verfahren gemäß Patentanspruch 1.

Die Erfindung betrifft daher ein Verfahren zur Herstellung von Mercapto-Endgruppen aufweisenden Homo- oder Copolymerisaten, die aufgebaut sind aus mindestens einem Monomeren aus der Gruppe Butadien, Isopren oder Styrol und erhalten werden durch anionische Polymerisation von mindestens einem der genannten Monomeren in Gegenwart mindestens einer Organolithiumverbindung und anschließender Umsetzung (der lebenden Anionen) mit einem Episulfid der allgemeinen Formel I

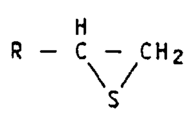

I

in der

R für Wasserstoff, Alkylgruppen mit 1 bis 18 C-Atomen oder Arylreste mit 6 bis 10 C-Atomen steht,

unter Bildung von mindestens einer primären oder sekundären Mercapto-Gruppe am Ende der Polymerkette(n).

Dieses Verfahren ist dadurch gekennzeichnet, daß man unmittelbar in die erhaltene Reaktionsmischung eine Thiolcarbonsäure der allgemeinen Formel II

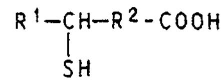

in welcher stehen für

$R^1$ Wasserstoff, eine Alkylgruppe mit 1 bis 10 C-Atomen oder einen $-CH_2-COOH$-Rest

$R^2$ 0 oder 1 bis 10 $CH_2$-Einheiten,

in einer Menge von 0,5 bis 2 Mol der Thiolcarbonsäure pro Mol Episulfid zugibt und das Reaktionsprodukt einer Nachbehandlung unterwirft.

Die Erfindung betrifft ferner die Verwendung der nach dem erfindungsgemäßen Verfahren hergestellten Mercapto-Endgruppen aufweisenden Polymerisate zur Herstellung von Blockcopolymerisaten aus einem anionisch initiierten und einem radikalisch polymerisierten Block und ferner zur Herstellung von mit Kautschuk schlagfest modifiziertem, transluzentem Polystyrol und/oder Poly(alkyl)-styrol.

Das erfindungsgemäße Verfahren ermöglicht dabei zum einen die Herstellung von Mercapto-Endgruppen aufweisenden anionisch hergestellten Homo- und Copolymerisaten mit weniger gekuppelten Anteilen. Zum anderen ist mit ihrer Verwendung die Herstellung von Blockcopolymerisaten mit höherer Blockcopolymer-Ausbeute und die Herstellung von schlagfestem, transluzentem Polystyrol mit höherer Transluzenz möglich.

Nachstehend wird das erfindungsgemäße Verfahren näher beschrieben.

Das erfindungsgemäße Verfahren wird in enger Anlehnung an das aus (1) bekannte Verfahren zur Herstellung Mercapto-Endgruppen aufweisender Polymerisate durchgeführt. Dabei werden in dem Fachmann an und für sich bekannter Art und Weise zunächst ein oder mehrere anionisch mit Li-organischen Verbindungen, insbesondere mit Butyllithium, polymerisierbare Monomere (z.B. Butadien, Isopren, Styrol, oder deren Mischungen) in einem unpolaren, aromatischen oder aliphatischen Kohlenwasserstoff-Lösungsmittel, z.B. aus der Gruppe Benzol, Toluol, Ethylbenzol, Cyclohexan, Cycloheptan oder Gemischen davon, zu Polymerketten mit einem reaktiven Kettenende polymerisiert.

Die mittlere Molmasse (GPC-Mittel) der Polymerisate soll im Bereich von 20.000 bis 500.000, vorzugsweise im Bereich von 30.000 bis 200.000 liegen.

Nach Beendigung der Polymerisation setzt man das reaktive Kettenende (lebendes Anion) der Polymerketten mit mindestens 1 Mol eines Thiiranderivates, bevorzugt mit Ethylensulfid oder Propylensulfid, je Mol Initiator um, wobei eine $-CH_2-CH_2-SLi$ oder eine $-CH_2-CH(CH_3)-SLi$-Endgruppe in das Molekül eingebaut wird. Das Thiiran hat die allgemeine Formel I

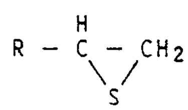

I

in der R für Wasserstoff, eine Alkylgruppe mit 1 bis 18 C-Atomen oder eine Arylgruppe mit 6 bis 10 C-Atomen steht.

Bei der Umsetzung kommt es nun zu einer unerwünschten Nebenreaktion in Form einer Kupplung von Polymerketten zu Polymermolekülen mit dem zwei-und mehrfachen der Ausgangsmolmasse. Die Kupplungsprodukte enthalten zwar die gleiche Schwefelmenge wie die ungekuppleten Moleküle, besitzen jedoch nicht die von den Mercaptogruppen ausgehende, für die weitere Umsetzung zu Blockcopolymerisaten oder schlagfestem, transluzentem Polystyrol oder Poly(alkyl)-styrol typische und notwendige Wirksamkeit. Insbesondere sind sie nicht in der Lage, bei radikalischer Polymerisation Blockcopolymer zu bilden. Ansonsten erhöhen sie erheblich die Lösungsviskosität und erschweren daher die Durchmischung und Ausbildung der gewünschten Morphologie bei der Verwendung in einer nachgeschalteten Polymerisation.

Innerhalb eng begrenzter Reaktionsbedingungen (Temperatur und Zeit) kann die Kupplungsreaktion zwar geringfügig beeinflußt, aber nicht in nennenswertem Ausmaß unterdrückt werden. Am besten wird die Umsetzung mit dem Episulfid in einem Temperaturbereich von 25 bis 50 °C während einer Reaktionszeit von 20 bis 120 Minuten durchgeführt. Niedrigere Temperaturen und kürzere Zeiten sind im Hinbick auf einen Umsatz des Episulfids weniger günstig, höhere Temperaturen und längere Zeiten bringen Nachteile durch verstärkt auftretende, andere Nebenreaktionen mit sich.

Es wurde nun überraschend gefunden, daß eine beachtliche Unterdrückung der Kupplungsreaktion und damit eine insgesamt bessere Wirksamkeit der Mercapto-Endgruppen aufweisenden Polymerisate erreicht werden kann, wenn man unmittelbar im Anschluß an die Umsetzung der reaktiven Kettenenden der

anionisch initiierten Polymerisate mit dem Episulfid der Reaktionsmischung eine Thiolcarbonsäure der Formel II

$$R^1-\underset{\displaystyle SH}{\underset{|}{CH}}-R^2-COOH$$

zusetzt. In der Formel stehen

$R^1$ für Wasserstoff, eine Alkylgruppe mit 1 bis 18 C-Atomen oder einen $-CH_2-COOH$-Rest,

$R^2$ für 0 oder steht für 1 bis 10 $CH_2$-Gruppen.

Besonders bevorzugt sind die Thioglykolsäure, Thiomilchsäure und die Thioäpfelsäure.

Der Zusatz der Thiolcarbonsäure in die Reaktionsmischung soll in einem Temperaturbereich von 20 bis 50 °C, vorzugsweise im Bereich von 30 bis 45 °C, erfolgen, wobei eine Nachreaktionszeit von 5 bis 120 Minuten, vorzugsweise von 15 bis 80 Minuten, unter gelindem Rühren eingehalten werden soll. Die Menge der Thiolcarbonsäure wird so gewählt, daß auf 1 Mol eingesetztes Episulfid 0,5 bis 2 Mol Thiolcarbonsäure kommen, wobei ein äquimolares Verhältnis bevorzugt wird. Größere Mengen bringen keinen zusätzlichen Effekt. Der Zusatz kann auf einmal oder in Portionen erfolgen. Die Thiolcarbonsäure kann in reiner Form oder verdünnt in einem geeigneten Lösungsmittel (z.B. Toluol) eingebracht werden.

Im Vergleich zu den Thiolcarbonsäuren haben Carbonsäuren (z.B. Eisessig) oder andere Säuren nur eine geringe Wirkung.

Dem Reaktionsgemisch können gegebenenfalls weitere Zusätze, wie Antioxidantien, in wirksamen Mengen beigefügt werden.

Die Aufarbeitung des Polymerisats kann beispielsweise durch Koagulieren in einem Nicht-Lösungsmittel, wie Methanol, mit anschließender Trocknung des gefällten Materials oder durch Verdampfen des Prozeßlösungsmittels erfolgen, falls dies im Hinblick auf die Verwendung erforderlich ist.

Nach dem erfindungsgemäßen Verfahren können Homo- oder Copolymerisate hergestellt werden, wobei die Anordnung der Monomeren in den Copolymerisaten in Form von Blöcken oder statistisch erfolgen kann. Von Blockcopolymerisaten seien solche mit verschmiertem Übergang, die durch gleichzeitige Polymerisation von Monomerengemischen (z.B. Styrol/Butadien) entstehen, genannt.

Nach der Art und Menge der verwendeten Monomeren können Thermoplaste, thermoplastische Elastomere oder Kautschuke hergestellt werden.

Diese Produkte lassen sich auf übliche Weise verarbeiten, z.B. durch Gießen von Lösungen, Pressen, Spritzgießen, Strangpressen, Schmelzspinnen und ähnlichen Methoden, wobei eine Vielzahl brauchbarer Produkte entstehen, z.B. Fasern, Folien, Presslinge und Spritzgießlinge. Die erhaltenen Blockcopolymerisate können auch auf übliche Weise z.B. Pigmenten, Füllstoffen Stabilisatoren, Flammschutzmittel und Farbstoffen, kompoundiert werden.

Besonders bevorzugt ist die direkte radikalische (peroxid-gestartete) Polymerisation der Reaktionsmischung zur Herstellung von Pfropfcopolymerisaten gemäß (1) und die Herstellung von schlagfestem und transluzentem Polystyrol bzw. Poly(alkyl)-styrol gemäß (2) oder (3).

Zur Charakterisierung des nach dem erfindungsgemäßen Verfahren erhaltenen Polymerisats eignen sich eine Vielzahl an und für sich bekannter Analysen-Methoden.

Die von Proben der in den Beispielen und Vergleichsversuchen angeführten Eigenschaften werden wie folgt gemessen:

1. die Bestimmung des Schwefelgehalts, S, in % durch Elementaranalyse,
2. Bestimmung der Molmasse, $\overline{M}$, in g/mol durch Gelpermetionschromatographie,
3. die Anteile an gekuppelten Nebenprodukten, K, in Flächen-%, bezogen auf die Gesamtfläche, durch Gelpermeationschromatographie (GPC),
4. die Bestimmung der Viskositätszahl, VZ, in ml/g bei 23 °C analog DIN 53 726 in Toluol.
5. Die Streckspannung, ST, in $N/mm^2$ wurde gemäß DIN 53 544 an gepreßten Schulterstäben bestimmt.
6. Die Lochkerbschlagzähigkeit, aKL, in $kJ/m^2$ wurde nach der DIN 53 753 an gepreßten Normkleinstäben bestimmt.
7. Zur Bewertung der Transluzenz, TL, der nach dem erfindungsgemäßen Verfahren erhaltenen und nach Anspruch 5 verwendeten Produkte wurde zunächst eine Skala erstellt. Diese Skala umfaßt die Noten 1 bis 9 in der folgenden Tabelle 1, wobei die niedrigeren Noten eine gute Transluzenz repräsentieren. Um die in der Tabelle 1 angeführten Noten zu definieren, wurde ein handelsübliches schlagzähes Polystyrol (Polystyrol KR 2791 der BASF Aktiengesellschaft) mit Kapselteilchenmorphologie zugrunde gelegt, das die Benotung 4 hat. Abmischungen dieses Produktes mit den in der Tabelle 1 genannten Gewichtsverhältnissen mit Standardpolystyrol der VZ = 96 ml/g ergaben die Werte von 3 bis 1 für die Transluzenz. Durch Abmischung mit einem schlagfesten handelsüblichen Polystyrol mit Zellenteilchenmorphologie (Polystyrol 476 L der BASF Aktiengesellschaft) wurden Mischungen mit höherer Transluzenz, also mit den Werten 5 bis 9 der Tabelle erhalten. Die Messung erfolgte durch visuellen Vergleich von 2 mm starken Preßplättchen aus Probematerial mit ebensolchen aus der genannten Eichsubstanz.

Tabelle 1

| Note für die Transluzenz | Produkt A | Abmischung in Gew.-Teilen Standardpolystyrol | Produkt B |
|---|---|---|---|
| 1 | 20 | 80 | 0 |
| 2 | 40 | 60 | 0 |
| 3 | 60 | 40 | 0 |
| 4 | 100 | 0 | 0 |
| 5 | 06 | 0 | 4 |
| 6 | 92 | 0 | 8 |
| 7 | 88 | 0 | 12 |
| 8 | 84 | 0 | 16 |
| 9 | 80 | 0 | 20 |

Die Erfindung wird nachstehend anhand von Beispielen näher erläutert, ohne sie einzuschränken. Alle darin angegebenen Teile und Prozente beziehen sich auf das Gewicht.

Beispiel 1

3500 ml Cyclohexan wurden in einer Rührapparatur unter Stickstoff vorgelegt und unter Zusatz einiger Tropfen Styrol mit sec-Butyllithium bei 40 °C bis zum Farbumschlag von farblos nach schwach gelb zur Entfernung von Verunreinigungen austitriert. Anschließend wurden 5,3 ml 1,45 N sec-Butyllithium-Lösung (7,7 mMol) mit einer Glasspritze zugesetzt und auf 70 °C aufgeheizt. 654 g (1006 ml) Butadien wurden während 50 Minuten so zugetropft, daß die Temperatur des Ansatzes stets zwischen 67 und 72 °C gehalten wurde. Danach wurde noch 70 Minuten bei 70 °C nachgerührt und dann die Probe 1A genommen.

Nach Abkühlen des Reaktionsansatzes auf 40 °C wurden 0,46 g frisch destilliertes Ethylensulfid (7,7 mMol) zugegeben, eine Stunde bei 40 °C gerührt und dann die Probe 18 genommen.

Der Ansatz wurde anschließend halbiert und zur einen Hälfte bei 40 °C 0,71 g Thioglykolsäure (7,7 mMol) gegeben. Nachdem eine Stunde bei 40 °C gerührt worden war, wurde die Probe 1C genommen. Die zweite Hälfte wurde anstelle der Thioglykolsäure mit 0,46 g Eisessig (7,7 mMol) versetzt und ebenso weiter behandelt. Davon wurde die Probe 10 genommen, die wie die übrigen Proben 1A, 1B und 1C durch Verdampfen des Lösungsmittels aufgearbeitet wurde.

Die Ergebnisse der an den Proben gemessenen Daten sind in Tabelle 2 zusammengestellt (K = Kupplung, Vz = Viskositätszahl).

Tabelle 2

| Bez. der Probe | $\overline{M}$*) g/mol | K % | VZ ml/g | [S] % |
|---|---|---|---|---|
| 1A | 85.000 | 2 | 130 | 0,001 |
| 1B | - | 41 | 198 | 0,048 |
| 1C | - | 15 | 135 | 0,048 |
| 1D | - | 33 | - | 0,049 |

*) Als Eichstandards wurden engverteilte Polybutadienproben verwendet.

Beispiel 2

Die Polymerisation und die Umsetzung mit Ethylensulfid wurden im wesentlichen, wie in Beispiel 1 beschrieben, durchgeführt. Anstelle von 654 g (1006 ml) Butadien wurden jedoch 500 g (770 ml) Butadien

verwendet. Zur Unterdrückung der Kupplung wurden zu je 1:3 des Ansatzes 0,71 g Thioglykolsäure (Probe 2A) , 0,82 g Thiomilchsäure (Probe 2B) und 1,16 g Thioäpfelsäure (Probe 2C) unter vergleichbaren Bedingungen wie in Beispiel 1 gegeben. Die Polymerisate wurden durch Zusatz von 0,5 % ®Kerobit TBK (ein sterisch gehindertes, phenolisches Antioxidans der BASF AG) stabilisiert.

Die Ergebnisse der Charakterisierung der Proben sind in Tabelle 3 zusammengestellt.

Tabelle 3

| | K % | VZ ml/g | [S] % |
|---|---|---|---|
| 2A | 22 | 120 | 0,048 |
| 2B | 24 | 127 | 0,048 |
| 2C | 20 | 123 | 0,048 |

Beispiel 3

Die Polymerisation wurde, wie in Beispiel 2 beschrieben, ausgeführt. Nach Abkühlen des Reaktionsansatzes auf 40°C wurden 0,57 g frisch destilliertes Propylensulfid (7,7 mMol) zugegeben, eine Stunde gerührt und dann die Probe 3A genommen.

Der Ansatz wurde anschließend bei 40°C mit 0,71 g Thioglykolsäure (7,7 mMol) versetzt. Nach einer Stunde Nachbehandlung bei 40°C wurde die Probe 3B genommen und wie alle Proben der vorangegangenen Beispiele durch Verdampfen des Lösungsmittels aufgearbeitet.

Der Anteil an gekuppeltem Material, K, betrug bei Probe 3A 33 % und bei Probe 3B 20 %.

Beispiel 4

Die modifizierten Polybutadiene 1B und 1C wurden zur Herstellung von schlagfestem, transluzenten Polystyrolen verwendet.

Hierzu wurden 9 Teile Polybutadien in 91 Teilen Styrol gelöst und diese Lösung dann in einem mit einem Ankerrührer ausgestatteten Kessel mit einem Fassungsvermögen von 5 Litern thermisch bei 123°C in Gegenwart von 0,05 % t-Dodecylmercaptan als Molekulargewichtsregler unter Rühren (200 min) bis zu einem Umsatz von 35 % polymerisiert. Danach wird in wäßriger Suspension weiterpolymerisiert. Hierzu werden 0,1 Teile Dicumylperoxid und pro Kilogramm der erhaltenen Reaktionsmischung 900 ml Wasser, 9,0 g eines Suspensionshilfsmittels auf Basis von Polyvinylpyrrolidon und 1,8 g Natriumpyrophosphat zugegeben. In Suspension wird bei einem Füllgrad von 90 % bei 300 Rührerumdrehungen pro Minute jeweils isotherm 5 Stunden bei 130°C und 5 Stunden bei 140°C bis zu einem Umsatz von mehr als 99 %, bezogen auf das Styrol, polymerisiert. Die auspolymerisierten Produktperlen werden abfiltriert, mit Wasser gewaschen und bei 60°C und 14 Torr getrocknet.

Die erhaltenen Produkte sind in Tabelle 4 charakterisiert.

Tabelle 4

| verwendetes Polybutadien | 1B | 1C |
|---|---|---|
| VZ | 85,6 | 86,2 |
| ST | 36,3 | 35,8 |
| aKL | 5,5 | 6,3 |
| TL | 3,5 | 2,0 |
| Anm. 1: Die Viskositätszahl (VZ) der Hartmatrix in ml/g wurde bei 23°C analog DIN 53 724 in Toluol bestimmt. | | |

An den Werten von Tabelle 4 wird deutlich, daß das Polybutadien 1C zu einem Produkt mit verbesserter Transluzenz führt.

## Patentansprüche

1. Verfahren zur Herstellung von Mercapto-Endgruppen aufweisenden Homo- oder Copolymerisaten, die aufgebaut sind aus mindestens einem Monomeren aus der Gruppe Butadien, Isopren oder Styrol und erhalten werden durch anionische Polymerisation von mindestens einem der genannten Monomeren in Gegenwart mindestens einer Organolithiumverbindung und anschließender Umsetzung (der lebenden Anionen) mit einem Episulfid der allgemeinen Formel I

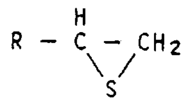

I

in der

R für Wasserstoff, Alkylgruppen mit 1 bis 18 C-Atomen oder Arylreste mit 6 bis 10 C-Atomen steht,

unter Bildung von mindestens einer primären oder sekundären Mercapto-Gruppe am Ende der Polymerkette(n), dadurch gekennzeichnet, daß man unmittelbar in die erhaltene Reaktionsmischung eine Thiolcarbonsäure der allgemeinen Formel II

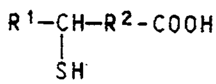

in welcher stehen für

$R^1$ Wasserstoff, eine Alkylgruppe mit 1 bis 10 C-Atomen oder einen -$CH_2$-COOH-Rest
$R^2$ 0 oder 1 bis 10 $CH_2$-Einheiten,

in einer Menge von 0,5 bis 2 Mol der Thiolcarbonsäure pro Mol Episulfid zugibt und das Reaktionsprodukt einer Nachbehandlung unterwirft.

2. Verfahren nach Anspruch 1, dadurch gekennzeichnet, daß ca. 1 Mol Thiolcarbonsäure pro Mol Episulfid angewendet wird, die für die Umsetzung verwendeten Polymer-Anionen bzw. lebenden Polymeren ein durch GPC ermitteltes Molgewicht von 20 000 bis 500 000 aufweisen und der Zusatz der Thiolcarbonsäure zum Reaktionsgemisch bei 20 bis 50 °C vorgenommen wird.

3. Verfahren nach Anspruch 1, dadurch gekennzeichnet, daß die Nachbehandlung bei Temperaturen von 20 bis 50 °C über einen Zeitraum von 5 bis 180 Minuten vorgenommen wird.

4. Verwendung von Produkten, hergestellt gemäß Anspruch 1, zur Herstellung von Blockcopolymerisaten mittels radikalischer Polymerisation.

5. Verwendung von Produkten, hergestellt gemäß Anspruch 1, als Kautschuk zur Herstellung von schlagfestem Poly(alkyl)-styrol.

## Claims

1. A process for the preparation of a homo- or copolymer which has terminal mercapto groups, is composed of one or more monomers from the group consisting of butadiene, isoprene and styrene and is obtained by anionic polymerisation of one or more of the stated monomers in the presence of one or more organolithium compounds followed by reaction (of the living anions) with an episulfide of the formula I

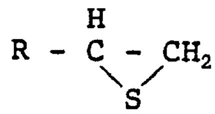

I

where R is hydrogen, alkyl of 1 to 18 carbon atoms or aryl of 6 to 10 carbon atoms, with formation of one or more primary or secondary mercapto groups at the end of the polymer chain(s), wherein a thiolcarboxylic acid of the formula II

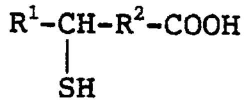

where $R^1$ is hydrogen, alkyl of 1 to 10 carbon atoms or $-CH_2-COOH$ and $R^2$ is 0 or from 1 to 10 $CH_2$ units, is added directly to the resulting reaction mixture in an amount of from 0.5 to 2 moles of the thiolcarboxylic acid per mole of episulfide, and the reaction product is subjected to an aftertreatment.

2. A process as claimed in claim .1, wherein about 1 mole of thiolcarboxylic acid is used per mole of episulfide, the polymer anions or living polymers used for the reaction have a molecular weight of from 20,000 to 500,000, determined by GPC, and the thiolcarboxylic acid is added to the reaction mixture at from 20 to 50 °C.

3. A process as claimed in claim 1, wherein the aftertreatment is carried out at from 20 to 50 °C for from 5 to 180 minutes.

4. Use of a product, prepared as claimed in claim 1, for the preparation of a block copolymer by means of free radical polymerization.

5. Use of a product, prepared as claimed in claim 1, as a rubber for the preparation of high-impact polyalkylstyrene.

**Revendications**

1. Procédé de fabrication d'homopolymères ou de copolymères, qui présentent des radicaux mercapto terminaux, qui sont constitués d'au moins un monomère appartenant au groupe du butadiène, de l'isoprène ou du styrène et que l'on obtient par la polymérisation anionique d'au moins l'un des monomères susmentionnés, en présence d'au moins un composé organolithien et par la réaction subséquente (des anions vivants) avec un épisulfure de la formule générale I

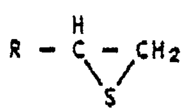

I

dans laquelle

R représente un atome d'hydrogène, des radicaux alkyle qui comportent de 1 à 18 atomes de carbone, ou des radicaux aryle qui possèdent de 6 à 10 atomes de carbone,

avec formation d'au moins un radical mercapto primaire ou secondaire à la fin de la ou des chaînes polymériques, caractérisé en ce que l'on ajoute immédiatement au mélange réactionnel obtenu un acide thiolcarboxylique de la formule générale

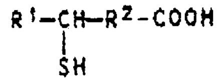

dans laquelle

- $R^1$ représente un atome d'hydrogène, un radical alkyle qui comporte de 1 à 10 atomes de carbone ou un radical $-CH_2-COOH$,
- $R^2$ représente 0 ou 1 à 10 unités $CH_2$,

dans la proportion de 0,5 à 2 moles de l'acide thiocarboxylique par mole d'épisulfure et on soumet le produit de la réaction à un traitement ultérieur.

**2.** Procédé suivant la revendication 1, caractérisé en ce que l'on utilise environ une mol d'acide thiolcarboxylique par mole d'épisulfure, les polymères vivants ou les anions polymériques utilisés pour la réaction présentent une masse moléculaire, telle que déterminée par chromatographie par perméation de gel, de 20.000 à 500.000 et on entreprend l'addition de l'acide thiolcarboxylique au mélange réactionnel à une température de 20 à 50° C.

**3.** Procédé suivant la revendication 1, caractérisé en ce que l'on entreprend le traitement ultérieur à des températures de 20 a 50° C pendant une période de 5 à 180 minutes.

**4.** Utilisation de produits, préparés suivant la revendication 1, en vue de la préparation de copolymères à blocs par polymérisation radicalaire.

**5.** Utilisation de produits, préparés suivant la revendication 1, à titre de caoutchouc pour la préparation de poly(alkyl)-styrène résistant au choc.